# EUROPEAN PATENT SPECIFICATION

(11) **EP 3 068 166 B1**
(45) Date of publication and mention of the grant of the patent: **14.02.2018**
(21) Application number: 13898781.3
(22) Date of filing: 06.12.2013
(51) Int. Cl.: H04W 74/00

(54) **METHOD AND APPARATUS FOR ACCESSING BASE STATION BY TERMINAL**
VERFAHREN UND VORRICHTUNG FÜR ZUGRIFF AUF EINE BASISSTATION DURCH EIN ENDGERÄT
PROCÉDÉ ET APPAREIL PERMETTANT À UN TERMINAL D'ACCÉDER À UNE STATION DE BASE

(43) Date of publication of application: 14.09.2016
(73) Proprietor: Huawei Technologies Co., Ltd., Longgang District Shenzhen, Guangdong 518129 (CN)
(72) Inventor: HE, Gaoning, Shenzhen Guangdong 518129 (CN); XU, Xiuqiang, Shenzhen Guangdong 518129 (CN); ZHANG, Shunqing, Shenzhen Guangdong 518129 (CN)
(74) Representative: Körber, Martin Hans
(86) International application number: PCT/CN2013/088711
(87) International publication number: WO 2015/081552

(56) References cited:
- WO-A1-2013/010418
- CN-A- 101 159 969
- CN-A- 101 599 896
- CN-A- 103 650 571
- US-A1- 2013 163 533

## Description

### TECHNICAL FIELD

The present invention relates to the field of communications technologies, and in particular, to a method for accessing a base station by a terminal, and an apparatus.

### BACKGROUND

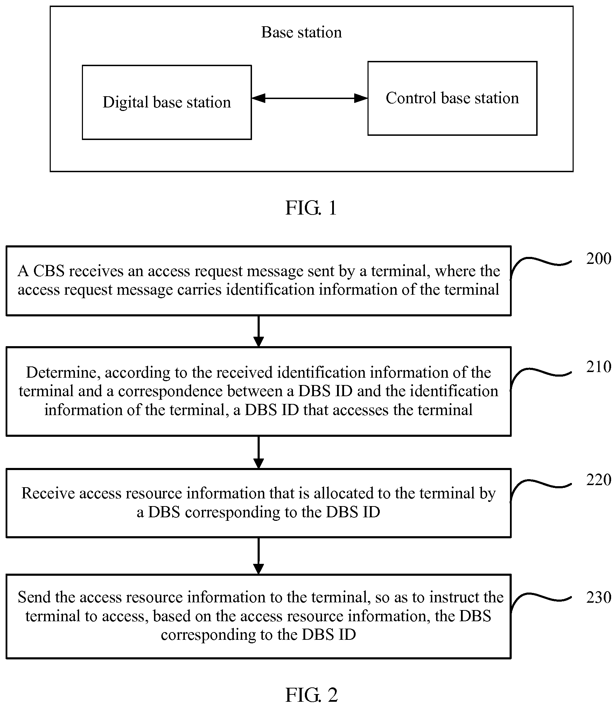

Currently, because a data and signaling separation network can effectively increase network capacity and reduce signaling overheads of the network, the data and signaling separation network is an important evolution direction for a future wireless network. Data and signaling separation refers to separation between a CP (control plane, control plane) and a UP (user plane, user plane). Compared with a conventional cellular network, a biggest characteristic of the data and signaling separation network is physically dividing a conventional BS (base station, base station) or an eNB (evolved node B) into two parts: a CBS (control BS, control base station) and a DBS (Data BS, data base station), as specifically shown in FIG. 1.

Generally, after a terminal is powered on, the terminal has no information about a base station in which the terminal is located. Therefore, after the terminal is powered on, the terminal needs to first access the base station, so as to implement communication between the terminal and the base station, and between the terminal and another terminal.

In the prior art, a main process in which a terminal accesses a base station in a data and signaling separation network is as follows:
Step a: A DBS periodically sends a synchronization signal (PSS (primary synchronized signal, primary synchronization signal)/SSS (secondary synchronization signal, secondary synchronization signal)) on a resource block.
Step b: The terminal monitors the synchronization signal to read a cell ID (identification, identification) of a cell covered by the DBS, and selects a cell according to the read cell ID.
Step c: The terminal reads system information after perform time and frequency synchronization with the DBS.
Step d: The terminal initiates random access to a CBS in the selected cell according to the read system information, and then establishes a connection to an RRC (radio resource control, radio resource) of the CBS.

However, the foregoing process has the following disadvantages:
(1) This method cannot be applied to a case in which a sent synchronization signal does not include a cell ID.
   In a network in which signaling and data are separated, a cell covered by a BS may have no independent cell ID. In this case, in the foregoing method for accessing a base station by a terminal, a cell ID cannot be read from a monitored synchronization signal, and cell selection cannot be performed. Therefore, the base station cannot be accessed either, and further, communication between the terminal and the base station, and between the terminal and another terminal cannot be implemented.
(2) A waste of resources is relatively severe, and an access process is relatively complex.

Currently, with the development of technologies, a quantity of cells is gradually increasing, and density of cells is further improved. In this case, a quantity of cell IDs that are of cells covered by a DBS and read by the terminal from the synchronization signal is relatively large, and the terminal needs to calculate the cell IDs of a large quantity so as to select a cell. Therefore, complexity of cell selection is relatively high, and complexity of accessing the base station by the terminal is also relatively high. In addition, because the cell IDs of a large quantity need to be calculated so as to select the cell, particular processing resources in the terminal need to be consumed. Therefore, a waste of resources is relatively severe.

WO 2013/010418 A1 discloses methods for accessing a base station by a terminal according to the preambles of claims 1 and 3 as well as a control base station according to the preamble of claim 4 and a data base station according to the preamble of claim 6.

### SUMMARY

The invention is defined by the independent claims. Embodiments are defined by the dependent claims. Embodiments of the present invention provide a method for accessing a base station by a terminal, and an apparatus, so as to resolve problems, in the prior art, of an access failure, a relatively complex access process, and a waste of processing resources of a terminal that exist when the terminal accesses a base station in a data and signaling separation network.

Specific technical solutions provided in the embodiments of the present invention are as follows:

According to a first aspect, a method for accessing a base station by a terminal is provided, including:
receiving, by a control base station CBS, an access request message sent by a terminal, where the access request message carries identification information of the terminal;
determining, according to the received identification information of the terminal and a correspondence between a data base station identification DBS ID and the identification information of the terminal, a DBS ID that accesses the terminal;
receiving access resource information that is allocated to the terminal by a DBS corresponding to the DBS ID; and
sending the access resource information to the terminal, so as to instruct the terminal to access, based on the access resource information, the DBS corresponding to the DBS ID wherein before the determining a DBS ID that accesses the terminal, the method further includes:
   receiving a detection signal that carries the identification information of the terminal and is reported by the DBS, so as to maintain the correspondence between the DBS ID and the identification information of the terminal.

With reference to the first aspect, in a first possible implementation manner, before the receiving access resource information that is allocated to the terminal by a DBS corresponding to the DBS ID, the method further includes:
forwarding the access request message to the DBS corresponding to the DBS ID, so as to request the DBS to allocate an access resource to the terminal.

According to a second aspect, a method for accessing a base station by a terminal is provided, including:
allocating, by a data base station DBS, access resource information to a terminal, where the access resource information is allocated by the DBS after a control base station CBS receives an access request message sent by the terminal, and determines the DBS ID according to identification information of the terminal carried in the access request message and a correspondence between the DBS identification ID and the identification information of the terminal; and
sending the access resource information to the CBS, so that the CBS sends the access resource information to the terminal, so as to instruct the terminal to access the DBS based on the access resource information wherein before the allocating, by a DBS, access resource information to a terminal, the method further includes:
   receiving the access request message forwarded by the CBS, where the access request message is used for requesting the DBS to allocate an access resource to the terminal and before the receiving the access request message forwarded by the CBS, the method further includes:
      receiving a detection signal sent by the terminal, and reporting the identification information of the terminal in the detection signal to the CBS, so that the CBS maintains the correspondence between the DBS ID and the identification information of the terminal.

According to a third aspect, a control base station CBS is provided, including:
a receiving unit, configured to receive an access request message sent by a terminal, where the access request message carries identification information of the terminal;
a determining unit, configured to determine, according to the received identification information of the terminal and a correspondence between a data base station identification DBS ID and the identification information of the terminal, a DBS ID that accesses the terminal;
an allocation unit, configured to receive access resource information that is allocated to the terminal by a DBS corresponding to the DBS ID; and
a sending unit, configured to send the access resource information to the terminal, so as to instruct the terminal to access, based on the access resource information, the DBS corresponding to the DBS ID wherein the receiving unit is further configured to:
   receive a detection signal that carries the identification information of the terminal and is reported by the DBS, so as to maintain the correspondence between the DBS ID and the identification information of the terminal.

With reference to the third aspect, in a first possible implementation manner, the sending unit is further configured to:
forward the access request message to the DBS corresponding to the DBS ID, so as to request the DBS to allocate an access resource to the terminal.

According to a fourth aspect, a data base station DBS is provided, including:
an allocation unit, configured to allocate access resource information to a terminal, where the access resource information is allocated by the DBS after a control base station CBS receives an access request message sent by the terminal, and determines the DBS ID according to identification information of the terminal carried in the access request message and a correspondence between the DBS identification ID and the identification information of the terminal; and
a sending unit, configured to send the access resource information to the CBS, so that the CBS sends the access resource information to the terminal, so as to instruct the terminal to access the DBS based on the access resource information wherein the
receiving unit is configured to:
   receive the access request message forwarded by the CBS, where the access request message is used for requesting the DBS to allocate an access resource to the terminal wherein the receiving unit is further configured to:
      receive a detection signal sent by the terminal, and report the identification information of the terminal in the detection signal to the CBS, so that the CBS maintains the correspondence between the DBS ID and the identification information of the terminal.

According to a fifth aspect, a base station is provided, including the control base station CBS according to the third aspect and the data base station DBS according to the fourth aspect.

According to a sixth aspect, a system is provided, including a terminal, and further including the base station according to the fifth aspect.

Beneficial effects of the present invention are as follows:
The embodiments of the present invention provide a method for accessing a base station by a terminal. In this provided solution, after a CBS receives an access request message sent by a terminal, the CBS determines, according to received identification information of the terminal and a correspondence between a DBS ID and the identification information of the terminal, a DBS ID that accesses the terminal; then a DBS corresponding to the DBS ID sends, to the terminal by using the CBS, access resource information allocated to the terminal; finally, the terminal accesses the DBS. Therefore, the terminal can access the DBS even if a cell covered by the DBS has no cell ID, which avoids a problem of an access failure existing when a terminal accesses a base station in a data and signaling separation network, and resolves problems of a relatively complex access process and a waste of processing resources of the terminal because there is no process for calculating multiple cell IDs.

### BRIEF DESCRIPTION OF DRAWINGS

FIG. 1 is a schematic structural diagram of a data and signaling separation network in the prior art;
FIG. 2 is a first detailed flowchart in which a terminal accesses a base station according to an embodiment of the present invention;
FIG. 3 is a second detailed flowchart in which a terminal accesses a base station according to an embodiment of the present invention;
FIG. 4 is an embodiment in which a terminal accesses a base station according to an embodiment of the present invention;
FIG. 5 is a schematic diagram of a first functional structure of a CBS according to an embodiment of the present invention;
FIG. 6 is a schematic diagram of a first functional structure of a DBS according to an embodiment of the present invention;
FIG. 7 is a schematic diagram of a functional structure of a base station according to an embodiment of the present invention;
FIG. 8 is a schematic diagram of a functional structure of a system according to an embodiment of the present invention;
FIG. 9 is a schematic diagram of a second functional structure of a CBS according to an embodiment of the present invention; and
FIG. 10 is a schematic diagram of a second functional structure of a DBS according to an embodiment of the present invention.

### DESCRIPTION OF EMBODIMENTS

To resolve prior-art problems of an access failure, a relatively complex access process, and a waste of processing resources of a terminal that exist when the terminal accesses a base station in a data and signaling separation network, embodiments of the present invention provide a method for accessing a base station by a terminal, which can efficiently avoid the problems of an access failure, a relatively complex access process, and a waste of processing resources of a terminal that exist when the terminal accesses a base station in a data and signaling separation network. The method is: receiving, by a CBS, an access request message sent by a terminal, where the access request message carries identification information of the terminal; determining, by the CBS according to the received identification information of the terminal and a correspondence between a DBS ID and the identification information of the terminal, a DBS ID that accesses the terminal, so that a DBS corresponding to the DBS ID sends, to the CBS, access resource information that is allocated to the terminal by the DBS, the access resource information is sent to the terminal by using the CBS, and finally, the terminal accesses, based on the access resource information, the DBS corresponding to the DBS ID. In this solution, after determining the identification information of the terminal from the access request message, the CBS determines, according to the correspondence between the DBS ID and the identification information of the terminal, the DBS ID that accesses the terminal, the DBS corresponding to the DBS ID allocates the access resource information to the terminal, and the terminal accesses the DBS. Therefore, the terminal can access the DBS even if a cell covered by the DBS has no cell ID, which avoids a problem of an access failure existing when a terminal accesses a base station in a data and signaling separation network, and resolves problems of a relatively complex access process and a waste of processing resources of the terminal because there is no process for calculating multiple cell IDs.

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

In the following, preferable implementation manners of the present invention are described in detail with reference to the accompanying drawings.

Referring to FIG. 2, in an embodiment of the present invention, a first detailed process in which a terminal accesses a base station is as follows:
Step 200: A CBS receives an access request message sent by the terminal, where the access request message carries identification information of the terminal.
Step 210: Determine, according to the received identification information of the terminal and a correspondence between a DBS ID and the identification information of the terminal, a DBS ID that accesses the terminal.
Step 220: Receive access resource information that is allocated to the terminal by a DBS corresponding to the DBS ID.
Step 230: Send the access resource information to the terminal, so as to instruct the terminal to access, based on the access resource information, the DBS corresponding to the DBS ID.

In this embodiment of the present invention, before step 220, that is, before receiving the access resource information that is allocated to the terminal by the DBS corresponding to the DBS ID, the following operation is further included:
forwarding the access request message to the DBS corresponding to the DBS ID, so as to request the DBS to allocate an access resource to the terminal.

In this embodiment of the present invention, before the CBS determines the DBS ID that accesses the terminal, the CBS needs to maintain the correspondence between the DBS ID and the identification information of the terminal, where the correspondence is obtained by the CBS after the DBS receives a detection signal sent by the terminal and reports the identification information of the terminal in the detection signal to the CBS. An implementation process may be: receiving the detection signal that carries the identification information of the terminal and is reported by the DBS, so as to maintain the correspondence between the DBS ID and the identification information of the terminal.

For example, a terminal 1 sends a random access request to a CBS 1 after completing time-frequency synchronization with the CBS 1; the CBS 1 sends, to the terminal 1, system information that carries resource information used for transmitting a detection signal, where the system information carries system information of a resource block 5, and the terminal 1 then sends every 5s, on the resource block 5, a detection signal that carries identification information of the terminal 1. When the detection signal that carries the identification information of the terminal 1 is monitored, a DBS 1 corresponding to the CBS 1 reports, to the CBS 1, the identification information of the terminal 1 obtained by parsing the monitored detection signal, and then the CBS 1 maintains a correspondence between the identification information of the terminal 1 and an ID of the DBS 1.

In the foregoing embodiment, that one DBS corresponding to the CBS reports the identification information of the terminal is merely described. In actual application, there may be multiple DBSs that are corresponding to the CBS and report the identification information of the terminal.

For example, a terminal 1 sends a random access request to a CBS 1 after completing time-frequency synchronization with the CBS 1; the CBS 1 sends, to the terminal 1, system information that carries resource information used for transmitting a detection signal, where the system information carries system information of a resource block 5, and the terminal 1 then sends every 5s, on the resource block 5, a detection signal that carries identification information of the terminal 1. When a detection signal that carries an ID of the terminal 1 is monitored, a DBS 1 and a DBS 2 that are corresponding to the CBS 1 report, to the CBS 1, the identification information of the terminal 1 obtained by parsing the monitored detection signal, and then the CBS 1 separately maintains a correspondence between the identification information of the terminal 1 and an ID of the reporting DBS 1, and a correspondence between the identification information of the terminal 1 and an ID of the reporting DBS 2.

The foregoing processes are merely two embodiments in which the CBS acquires the correspondence. In actual application, there are further a plurality of other implementation manners, and details are not described herein again.

In this embodiment of the present invention, there are a plurality of manners in which a terminal acquires resource information used for sending a detection signal. For example, the terminal may agree with a network side in advance upon resource information used for transmitting the detection signal. In this case, there are a plurality of manners in which the terminal acquires the resource information agreed upon in advance. For example, the terminal completes time-frequency synchronization with the CBS, sends a random access request to a CBS, and then receives system information that carries resource information used for transmitting the detection signal and is returned by the CBS after the CBS receives the random access request.

For another example, preset resource information that is corresponding to identification information of the terminal and used for transmitting the detection signal is determined.

The foregoing processes are merely two embodiments in which the terminal acquires the resource information used for sending the detection signal. In actual application, there are further a plurality of other implementation manners, and details are not described herein again.

In this embodiment of the present invention, there are a plurality of manners in which a terminal sends a detection signal. For example, the detection signal may be periodically sent, or may be sent upon a triggering condition. In actual application, there are a plurality of manners of implementing the sending, and details are not described herein again.

In this embodiment of the present invention, the DBS may report, periodically or for multiple times, the identification information of the terminal obtained by parsing the monitored detection signal; therefore, the correspondence that is between the identification information of the terminal and the ID of the DBS and maintained in the CBS does not remain unchanged and is subject to updates. An updating manner may be: overwriting an original correspondence between the identification information of the terminal and the ID of the DBS, or may be: retaining an original correspondence between the identification information of the terminal and the ID of the DBS, and adding a new correspondence between the identification information of the terminal and the ID of the DBS.

For example, in a first period, a DBS 1 reports, to a CBS 1, identification information of a terminal 1 obtained by parsing a monitored detection signal, and the CBS 1 maintains a correspondence between the identification information of the terminal 1 and an ID of the DBS 1. In a second period, if both the DBS 1 and a DBS 2 report, to the CBS 1, the identification information of the terminal 1 obtained by parsing the monitored detection signal, the CBS 1 retains the maintained correspondence between the identification information of the terminal 1 and the ID of the DBS 1, and adds a new correspondence between the identification information of the terminal 1 and an ID of the DBS 2; if only the DBS 2 reports, to the CBS 1, the identification information of the terminal 1 obtained by parsing the monitored detection signal, the CBS 1 deletes the maintained correspondence between the identification information of the terminal 1 and the ID of the DBS 1, and adds a new correspondence between the identification information of the terminal 1 and an ID of the DBS 2, that is, the correspondence between the identification information of the terminal 1 and the ID of the DBS 2 replaces the correspondence between the identification information of the terminal 1 and the ID of the DBS 1.

In this embodiment of the present invention, there may be more than one DBS that reports the identification information of the terminal to the CBS. In this case, the CBS forwards the received access request to at least one of the multiple DBSs that report the identification information of the terminal, and then forwards access resource information of the at least one DBS to the terminal, and the terminal accesses the at least one DBS based on the access resource information.

For example, a terminal 1 sends a random access request to a CBS 1 after completing time-frequency synchronization with the CBS 1; the CBS 1 sends, to the terminal 1, system information that carries resource information used for transmitting a detection signal, where the system information carries system information of a resource block 5, and the terminal 1 then sends every 5s, on the resource block 5, a detection signal that carries identification information of the terminal 1. When a detection signal that carries the identification information of the terminal 1 is monitored, a DBS 1, a DBS 2, a DBS 3, a DBS 4, a DBS 5, a DBS 6, a DBS 7, a DBS 8, a DBS 9, and a DBS 10 that are corresponding to the CBS 1 separately report, to the CBS 1, the identification information of the terminal 1 obtained by parsing the monitored detection signal, and then the CBS 1 separately maintains correspondences between the identification information of the terminal 1, and an ID of the DBS 1, an ID of the DBS 2, an ID of the DBS 3, an ID of the DBS 4, an ID of the DBS 5, an ID of the DBS 6, an ID of the DBS 7, an ID of the DBS 8, an ID of the DBS 9, and an ID of the DBS 10. However, the CBS 1 forwards the access request to the DBS 1 corresponding to the ID of the DBS 1, the DBS 2 corresponding to the ID of the DBS 2, and the DBS 3 corresponding to the ID of the DBS 3, and receives access resources respectively returned by the DBS1, the DBS 2, and the DBS 3; then the CBS 1 sends, to the terminal, the access resources respectively corresponding to the DBS1, the DBS 2, and the DBS 3, so that the terminal accesses the DBS1, the DBS 2, and the DBS 3.

In this embodiment of the present invention, after determining identification information of a terminal from an access request message, a CBS determines, according to a correspondence between a DBS ID and the identification information of the terminal, a DBS ID that accesses the terminal, a DBS corresponding to the DBS ID allocates access resource information to the terminal, and then the terminal accesses the DBS according to the access resource information. Therefore, the terminal can access the DBS even if a cell covered by the DBS has no cell ID, which avoids a problem of an access failure existing when a terminal accesses a base station in a data and signaling separation network, and resolves problems of a relatively complex access process and a waste of processing resources of the terminal because there is no process for calculating multiple cell IDs.

In this embodiment of the present invention, the identification information of the terminal has multiple forms, for example, the ID of the terminal, and other forms, and details are not described herein again.

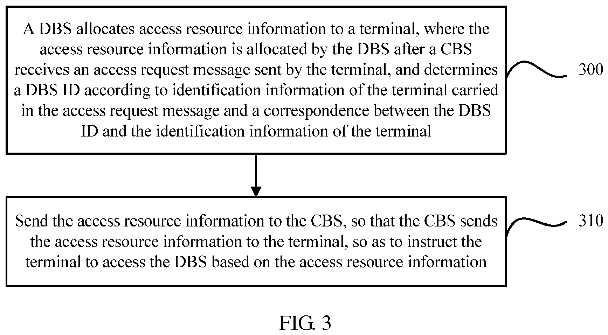

Referring to FIG. 3, in an embodiment of the present invention, a second detailed process in which a terminal accesses a base station is as follows:
Step 300: A DBS allocates access resource information to the terminal, where the access resource information is allocated by the DBS after a CBS receives an access request message sent by the terminal, and determines a DBS ID according to identification information of the terminal carried in the access request message and a correspondence between the DBS ID and the identification information of the terminal.
Step 310: Send the access resource information to the CBS, so that the CBS sends the access resource information to the terminal, so as to instruct the terminal to access the DBS based on the access resource information.
In this embodiment of the present invention, before the DBS allocates the access resource information to the terminal, the following operation is further included:
   receiving the access request message forwarded by the CBS, where the access request message is used for requesting the DBS to allocate an access resource to the terminal.

In this embodiment of the present invention, before the access request message forwarded by the CBS is received, the following operations are further included: receiving a detection signal sent by the terminal, and reporting the identification information of the terminal in the detection signal to the CBS, so that the CBS maintains the correspondence between the DBS ID and the identification information of the terminal.

For example, a terminal 1 sends a random access request to a CBS 1 after completing time-frequency synchronization with the CBS 1; the CBS 1 sends, to the terminal 1, system information that carries resource information used for transmitting a detection signal, where the system information carries system information of a resource block 5, and the terminal 1 then sends every 5s, on the resource block 5, a detection signal that carries identification information of the terminal 1. When a detection signal that carries the identification information of the terminal 1 is monitored, a DBS 1 corresponding to the CBS 1 reports, to the CBS 1, the identification information of the terminal 1 obtained by parsing the monitored detection signal, and then the CBS 1 maintains a correspondence between the identification information of the terminal 1 and an ID of the reporting DBS 1.

In the foregoing embodiment, that one DBS corresponding to the CBS reports the identification information of the terminal is merely described. In actual application, there may be multiple DBSs that are corresponding to the CBS and report the identification information of the terminal. When the CBS determines multiple IDs corresponding to the identification information of the terminal, for a DBS corresponding to any DBS ID, when the terminal accesses, step 300 to step 310 may be executed, so as to implement access of the terminal.

In this embodiment of the present invention, there are a plurality of manners in which a terminal acquires resource information used for sending a detection signal. For example, the terminal may agree with a network side in advance upon resource information used for transmitting the detection signal. In this case, there are a plurality of manners in which the terminal acquires the resource information agreed upon in advance. For example, the terminal first sends a random access request to a CBS after completing time-frequency synchronization with the CBS, and then receives system information that carries resource information used for transmitting the detection signal and is returned by the CBS after the CBS receives the random access request.

For another example, preset resource information that is corresponding to identification information of the terminal and used for transmitting the detection signal is determined.

The foregoing processes are merely two embodiments in which the terminal acquires the resource information used for sending the detection signal. In actual application, there are further a plurality of other implementation manners, and details are not described herein again.

In this embodiment of the present invention, there are a plurality of manners in which a terminal sends a detection signal. For example, the detection signal may be periodically sent, or may be sent upon a triggering condition. In actual application, there are a plurality of manners of implementing the sending, and details are not described herein again.

In this embodiment, after determining identification information of a terminal from an access request message, a CBS determines, according to a correspondence between a DBS ID and the identification information of the terminal, a DBS ID that accesses the terminal, then a DBS corresponding to the DBS ID allocates access resource information to the terminal, and finally, the terminal receives the access resource information sent by the CBS, and accesses the DBS according to the access resource information. Therefore, the terminal can access the DBS even if a cell covered by the DBS has no cell ID, which avoids a problem of an access failure existing when a terminal accesses a base station in a data and signaling separation network, and resolves problems of a relatively complex access process and a waste of processing resources of the terminal because there is no process for calculating multiple cell IDs.

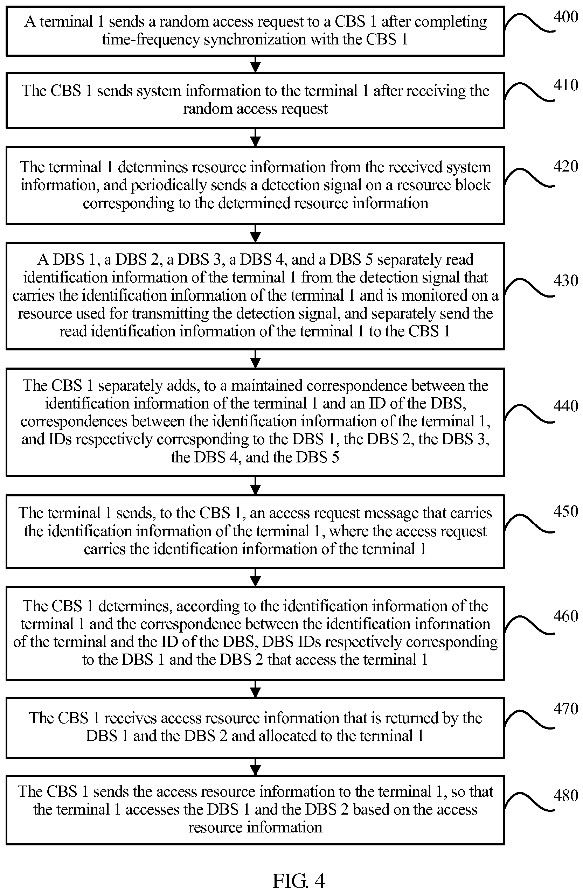

To better understand this embodiment of the present invention, the following provides a specific application scenario and makes a further detailed description about a process in which a terminal accesses a base station, referring to FIG. 4:
Step 400: A terminal 1 sends a random access request to a CBS 1 after completing time-frequency synchronization with the CBS 1.
Step 410: The CBS 1 sends system information to the terminal 1 after receiving the random access request.
In this step, the system information carries resource information used for the terminal 1 to transmit a detection signal.
Step 420: The terminal 1 determines resource information from the received system information, and periodically sends a detection signal on a resource block corresponding to the determined resource information.
In this step, the detection signal carries identification information of the terminal 1.
Step 430: A DBS 1, a DBS 2, a DBS 3, a DBS 4, and a DBS 5 separately read identification information of the terminal 1 from the detection signal that carries the identification information of the terminal 1 and is monitored on a resource used for transmitting the detection signal, and separately send the read identification information of the terminal 1 to the CBS 1.
Step 440: The CBS 1 separately adds, to a maintained correspondence between the identification information of the terminal 1 and an ID of the DBS, correspondences between the identification information of the terminal 1, and IDs respectively corresponding to the DBS 1, the DBS 2, the DBS 3, the DBS 4, and the DBS 5.
Step 450: The terminal 1 sends, to the CBS 1, an access request message that carries the identification information of the terminal 1, where the access request carries the identification information of the terminal 1.
Step 460: The CBS 1 determines, according to the identification information of the terminal 1 and the correspondence between the identification information of the terminal and the ID of the DBS, DBS IDs respectively corresponding to the DBS 1 and the DBS 2 that access the terminal 1.
Step 470: The CBS 1 receives access resource information that is returned by the DBS 1 and the DBS 2 and allocated to the terminal 1.
Step 480: The CBS 1 sends the access resource information to the terminal 1, so that the terminal 1 accesses the DBS 1 and the DBS 2 based on the access resource information.

In this embodiment of the present invention, after determining identification information of a terminal 1 from an access request message, a CBS 1 determines, according to a correspondence between a DBS ID and the identification information of the terminal, a DBS 1 ID and a DBS 2 ID that access the terminal 1, then a DBS 1 corresponding to the DBS 1 ID and a DBS 2 corresponding to the DBS 2 ID allocate access resource information to the terminal 1, finally the terminal receives the access resource information that is sent by the CBS 1 and allocated to the terminal 1 by the DBS 1 and the DBS 2, and the terminal 1 accesses the DBS 1 and the DBS 2 according to the access resource information. Therefore, the terminal 1 can access the DBS 1 and the DBS 2 even if cells covered by the DBS 1 and the DBS 2 have no cell ID, which avoids a problem of an access failure existing when a terminal accesses a base station in a data and signaling separation network, and resolves problems of a relatively complex access process and a waste of processing resources of the terminal because there is no process for calculating multiple cell IDs.

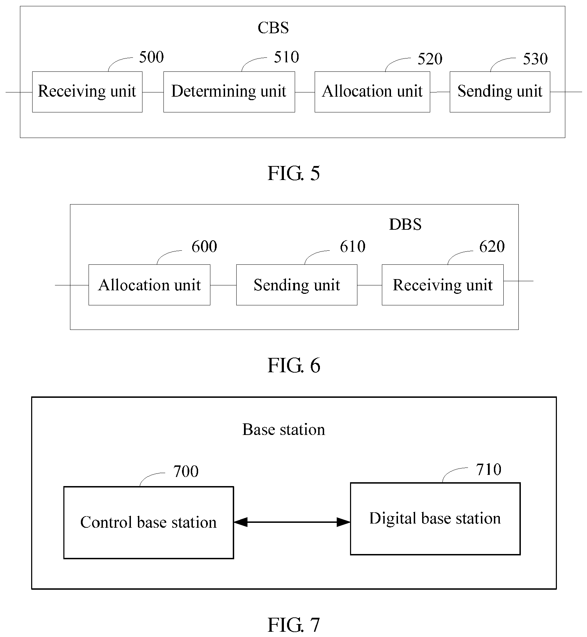

As shown in FIG. 5, an embodiment of the present invention provides a CBS, including:
a receiving unit 500, configured to receive an access request message sent by a terminal, where the access request message carries identification information of the terminal;
a determining unit 510, configured to determine, according to the received identification information of the terminal and a correspondence between a data base station identification DBS ID and the identification information of the terminal, a DBS ID that accesses the terminal;
an allocation unit 520, configured to receive access resource information that is allocated to the terminal by a DBS corresponding to the DBS ID; and
a sending unit 530, configured to send the access resource information to the terminal, so as to instruct the terminal to access, based on the access resource information, the DBS corresponding to the DBS ID.

Further, in this embodiment of the present invention, the sending unit 530 is further configured to: forward the access request message to the DBS corresponding to the DBS ID, so as to request the DBS to allocate an access resource to the terminal.

Further, in this embodiment of the present invention, the receiving unit 500 is further configured to: receive a detection signal that carries the identification information of the terminal and is reported by the DBS, so as to maintain the correspondence between the DBS ID and the identification information of the terminal.

As shown in FIG. 6, an embodiment of the present invention provides a DBS, including:
an allocation unit 600, configured to allocate access resource information to a terminal, where the access resource information is allocated by the DBS after a control base station CBS receives an access request message sent by the terminal, and determines a DBS ID according to identification information of the terminal carried in the access request message and a correspondence between the DBS identification ID and the identification information of the terminal; and
a sending unit 610, configured to send the access resource information to the CBS, so that the CBS sends the access resource information to the terminal, so as to instruct the terminal to access the DBS based on the access resource information.

Further, in this embodiment of the present invention, the DBS further includes a receiving unit 620, where the receiving unit 620 is configured to: receive the access request message forwarded by the CBS, where the access request message is used for requesting the DBS to allocate an access resource to the terminal.

Further, in this embodiment of the present invention, the DBS further includes the receiving unit 620, where the receiving unit 620 is further configured to: receive a detection signal sent by the terminal, and report the identification information of the terminal in the detection signal to the CBS, so that the CBS maintains the correspondence between the DBS ID and the identification information of the terminal.

As shown in FIG. 7, an embodiment of the present invention provides a base station, including a CBS 700 shown in FIG. 5 and a DBS 710 shown in FIG. 6.

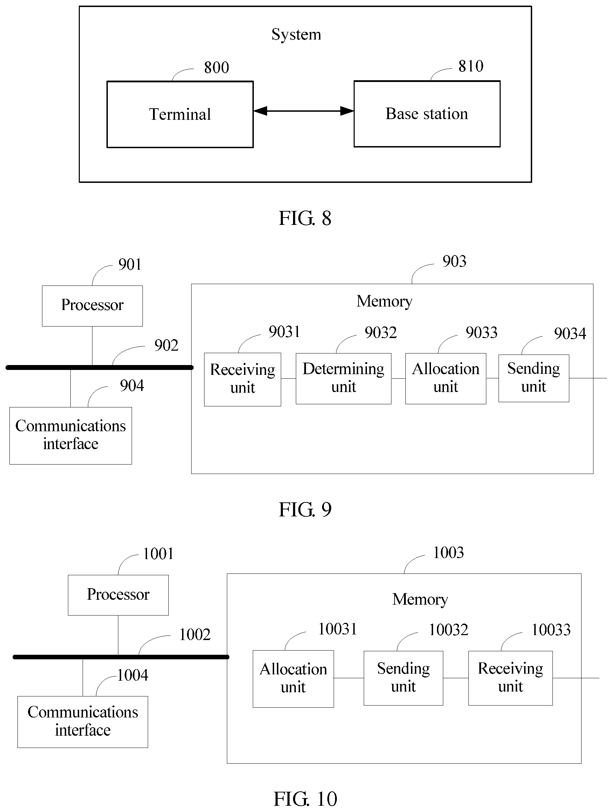

As shown in FIG. 8, an embodiment of the present invention provides a system, including a terminal 800, and further including a base station 810 shown in FIG. 7.

As shown in FIG. 9, an embodiment of the present invention provides another structural diagram of a CBS, where the CBS includes at least one processor 901, a communications bus 902, a memory 903, and at least one communications interface 904.

The communications bus 902 is configured to implement connection and communication between the foregoing components, and the communications interface 904 is configured to connect to and communicate with an external device.

The memory 903 is configured to store program code that needs to be executed, where the program code may specifically include: a receiving unit 9031, a determining unit 9032, an allocation unit 9033, and a sending unit 9034, and when the foregoing units are executed by the processor 901, the following functions are implemented:

The receiving unit 9031 is configured to receive an access request message sent by a terminal, where the access request message carries identification information of the terminal.

The determining unit 9032 is configured to determine, according to the received identification information of the terminal and a correspondence between a data base station identification DBS ID and the identification information of the terminal, a DBS ID that accesses the terminal.

The allocation unit 9033 is configured to receive access resource information that is allocated to the terminal by a DBS corresponding to the DBS ID.

The sending unit 9034 is configured to send the access resource information to the terminal, so as to instruct the terminal to access, based on the access resource information, the DBS corresponding to the DBS ID.

As shown in FIG. 10, an embodiment of the present invention provides another structural diagram of a DBS, where the DBS includes at least one processor 1001, a communications bus 1002, a memory 1003 and at least one communications interface 1004.

The communications bus 1002 is configured to implement connection and communication between the foregoing components, and the communications interface 1004 is configured to connect to and communicate with an external device.

The memory 1003 is configured to store program code that needs to be executed, where the program code may specifically include: an allocation unit 10031, a sending unit 10032, and a receiving unit 10033, and when the foregoing units are executed by the processor 1001, the following functions are implemented:

The allocation unit 10031 is configured to allocate access resource information to a terminal, where the access resource information is allocated by the DBS after a control base station CBS receives an access request message sent by the terminal, and determines a DBS ID according to identification information of the terminal carried in the access request message and a correspondence between the DBS identification ID and the identification information of the terminal.

The sending unit 10032 is configured to send the access resource information to the CBS, so that the CBS sends the access resource information to the terminal, so as to instruct the terminal to access the DBS based on the access resource information.

The receiving unit 10033 is configured to receive the access request message forwarded by the CBS, where the access request message is used for requesting the DBS to allocate an access resource to the terminal.

In conclusion, the embodiments of the present invention provide a method for accessing a base station by a terminal. In this provided solution, after a CBS receives an access request message sent by a terminal, the CBS determines, according to received identification information of the terminal and a correspondence between a DBS ID and the identification information of the terminal, a DBS ID that accesses the terminal; then a DBS corresponding to the DBS ID allocates access resource information to the terminal; finally, the terminal accesses the DBS. Therefore, the terminal can access the DBS even if a cell covered by the DBS has no cell ID, which avoids a problem of an access failure existing when a terminal accesses a base station in a data and signaling separation network, and resolves problems of a relatively complex access process and a waste of processing resources of the terminal because there is no process for calculating multiple cell IDs.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may also be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some embodiments of the present invention have been described, persons skilled in the art can make changes and modifications to these embodiments once they learn the basic inventive concept. Therefore, the following claims are intended to be construed as to cover the preferred embodiments and all changes and modifications falling within the scope of the present invention.

Obviously, persons skilled in the art can make various modifications and variations to the embodiments of the present invention without departing from the scope of the embodiments of the present invention. The present invention is intended to cover these modifications and variations provided that they fall within the scope of protection defined by the following claims and their equivalent technologies.

## Claims

1. A method for accessing a base station by a terminal, comprising:
receiving (200), by a ,control base station, CBS, an access request message sent by a terminal, wherein the access request message carries identification information of the terminal;
determining (210), according to the received identification information of the terminal and a correspondence between a data base station identification DBS ID and the identification information of the terminal, a DBS ID that is accessed by the terminal;
receiving (220) access resource information that is allocated to the terminal by a DBS corresponding to the DBS ID; and
sending (230) the access resource information to the terminal, so as to instruct the terminal to access, based on the access resource information, the DBS corresponding to the DBS ID
**characterized by** before the determining (210) a DBS ID that accesses the terminal, further comprising:
receiving a detection signal that carries the identification information of the terminal and is reported by the DBS, so as to maintain the correspondence between the DBS ID and the identification information of the terminal.

2. The method according to claim 1, before the receiving (220) access resource information that is allocated to the terminal by a DBS corresponding to the DBS ID, further comprising:
forwarding the access request message to the DBS corresponding to the DBS ID, so as to request the DBS to allocate an access resource to the terminal.

3. A method for accessing a base station by a terminal, comprising:
allocating, (330) by a data base station DBS, access resource information to a terminal, wherein the access resource information is allocated by the DBS after a control base station CBS receives an access request message sent by the terminal, and determines a DBS ID according to identification information of the terminal carried in the access request message and a correspondence between the DBS identification ID and the identification information of the terminal; and
sending (310) the access resource information to the CBS, so that the CBS sends the access resource information to the terminal, so as to instruct the terminal to access the DBS based on the access resource information
**characterized by** before the allocating (330), by a DBS, access resource information to a terminal, the method further comprising:
receiving the access request message forwarded by the CBS, wherein the access request message is used for requesting the DBS to allocate an access resource to the terminal and before the receiving the access request message forwarded by the CBS, the method further comprising:
receiving a detection signal sent by the terminal, and reporting the identification information of the terminal in the detection signal to the CBS, so that the CBS maintains the correspondence between the DBS ID and the identification information of the terminal.

4. A control base station CBS, comprising:
a receiving unit (9031), configured to receive an access request message sent by a terminal, wherein the access request message carries identification information of the terminal;
a determining unit (9032), configured to determine, according to the received identification information of the terminal and a correspondence between a data base station identification DBS ID and the identification information of the terminal, a DBS ID that accesses the terminal;
an allocation unit (9033), configured to receive access resource information that is allocated to the terminal by a DBS corresponding to the DBS ID; and
a sending unit (9034), configured to send the access resource information to the terminal, so as to instruct the terminal to access, based on the access resource information, the DBS corresponding to the DBS ID
**characterized in that** the receiving unit (9031) is further configured to:
receive a detection signal that carries the identification information of the terminal and is reported by the DBS, so as to maintain the correspondence between the DBS ID and the identification information of the terminal.

5. The CBS according to claim 4, wherein the sending unit (9034) is further configured to:
forward the access request message to the DBS corresponding to the DBS ID, so as to request the DBS to allocate an access resource to the terminal.

6. A data base station DBS, comprising:
an allocation unit (10031), configured to allocate access resource information to a terminal, wherein the access resource information is allocated by the DBS after a control base station CBS receives an access request message sent by the terminal, and determines the DBS ID according to identification information of the terminal carried in the access request message and a correspondence between the DBS identification ID and the identification information of the terminal; and
a sending unit (10032), configured to send the access resource information to the CBS, so that the CBS sends the access resource information to the terminal, so as to instruct the terminal to access the DBS based on the access resource information
**characterized by** further comprising a receiving unit (10033), wherein the receiving unit (10033) is configured to:
receive the access request message forwarded by the CBS, wherein the access request message is used for requesting the DBS to allocate an access resource to the terminal wherein the receiving unit (10033) is further configured to:
receive a detection signal sent by the terminal, and report the identification information of the terminal in the detection signal to the CBS, so that the CBS maintains the correspondence between the DBS ID and the identification information of the terminal.

7. A base station, comprising the control base station CBS according to claim 4 and the data base station DBS according to claim 6.

8. A system, comprising a terminal, and further comprising the base station according to claim 7.

## Patentansprüche

1. Verfahren zum Zugreifen auf eine Basisstation durch ein Endgerät, umfassend:
Empfangen (200) durch eine Steuerungsbasisstation, CBS, einer durch ein Endgerät gesendeten Zugriffsanfrogenachricht, wobei die Zugriffsanfrogenachricht Kennungsinformationen des Endgeräts führt;
Bestimmen (210) gemäß den empfangenen Kennungsinformationen des Endgeräts und einer Entsprechung zwischen einer Datenbasisstationskennung, DBS ID, und den Kennungsinformationen des Endgeräts einer DBS ID, auf die durch das Endgerät zugegriffen wird;
Empfangen (220) von Zugriffsressourceninformationen, die dem Endgerät durch eine der DBS ID entsprechende DBS zugeteilt sind; und
Senden (230) der Zugriffsressourceninformationen zum Endgerät, um das Endgerät anzuweisen, basierend auf den Zugriffsressourceninformationen auf die der DBS ID entsprechende DBS zuzugreifen,
**dadurch gekennzeichnet, dass** es vor dem Bestimmen (210) einer DBS ID, die auf das Endgerät zugreift, weiterhin Folgendes umfasst:
Empfangen eines Erkennungssignals, das die Kennungsinformationen des Endgeräts führt und durch die DBS gemeldet wird, zum Aufrechterhalten der Entsprechung zwischen der DBS ID und den Kennungsinformationen des Endgeräts.

2. Verfahren nach Anspruch 1, vor dem Empfangen (220) von Zugriffsressourceninformationen, die dem Endgerät durch eine der DBS ID entsprechende DBS zugeteilt sind, weiterhin umfassend:
Weiterleiten der Zugriffsanfrogenachricht zu der der DBS ID entsprechenden DBS zum Anfragen der DBS, dem Endgerät eine Zugriffsressource zuzuteilen.

3. Verfahren zum Zugreifen auf eine Basisstation durch ein Endgerät, umfassend:
Zuteilen (330) durch eine Datenbasisstation, DBS, von Zugriffsressourceninformationen zu einem Endgerät, wobei die Zugriffsressourceninformationen durch die DBS zugeteilt werden, nachdem eine Steuerungsbasisstation CBS, eine durch das Endgerät gesendete Zugriffsanfragenachricht empfängt und eine DBS ID gemäß in der Zugriffsanfragenachricht geführten Kennungsinformationen des Endgeräts und einer Entsprechung zwischen der DBS-Kennungs, DBS ID, und den Kennungsinformationen des Endgeräts bestimmt; und
Senden (310) der Zugriffsressourceninformationen zu der CBS, so dass die CBS die Zugriffsressourceninformationen zum Endgerät sendet, um das Endgerät anzuweisen, basierend auf den Zugriffsressourceninformationen auf die DBS zuzugreifen, **gekennzeichnet dadurch, dass** vor dem Zuteilen (330) durch eine DBS von Zugriffsressourceninformationen zu einem Endgerät das Verfahren weiterhin Folgendes umfasst:
Empfangen der durch die CBS weitergeleiteten Zugriffsanfragenachricht, wobei die Zugriffsanfragenachricht zum Anfragen der DBS benutzt wird, dem Endgerät eine Zugriffsressource zuzuteilen und vor dem Empfangen der durch die CBS weitergeleiteten Zugriffsanfragenachricht das Verfahren weiterhin Folgendes umfasst:
Empfangen eines durch das Endgerät gesendeten Erkennungssignals und Melden der Kennungsinformationen des Endgeräts in dem Erkennungssignal an die CBS, so dass die CBS die Entsprechung zwischen der DBS ID und den Kennungsinformationen des Endgeräts aufrechterhält.

4. Steuerungsbasisstation, CBS, umfassend:
eine Empfangseinheit (9031), eingerichtet zum Empfangen einer durch ein Endgerät gesendeten Zugriffsanfragenachricht, wobei die Zugriffsanfragenachricht Kennungsinformationen des Endgeräts führt;
eine Bestimmungseinheit (9032), eingerichtet zum Bestimmen gemäß den empfangenen Kennungsinformationen des Endgeräts und einer Entsprechung zwischen einer Datenbasisstationskennung, DBS ID, und den Kennungsinformationen des Endgeräts einer DBS ID, die auf das Endgerät zugreift;
eine Zuteilungseinheit (9033), eingerichtet zum Empfangen von Zugriffsressourceninformationen, die dem Endgerät durch eine der DBS ID entsprechende DBS zugeteilt sind; und
eine Sendeeinheit (9034), eingerichtet zum Senden der Zugriffsressourceninformationen zu dem Endgerät, um das Endgerät anzuweisen, basierend auf den Zugriffsressourceninformationen auf die der DBS ID entsprechende DBS zuzugreifen,
**dadurch gekennzeichnet, dass** die Empfangseinheit (9031) weiterhin eingerichtet ist zum:
Empfangen eines Erkennungssignals, das die Kennungsinformationen des Endgeräts führt und der DBS gemeldet wird, um die Entsprechung zwischen der DBS ID und den Kennungsinformationen des Endgeräts aufrechtzuerhalten.

5. CBS nach Anspruch 4, wobei die Sendeeinheit (9034) weiterhin eingerichtet ist zum: Weiterleiten der Zugriffsanfragenachricht zu der der DBS ID entsprechenden DBS zum Anfragen der DBS, dem Endgerät eine Zugriffsressource zuzuteilen.

6. Daten-Basisstation, DBS, umfassend:
eine Zuteilungseinheit (10031), eingerichtet zum Zuteilen von Zugriffsressourceninformationen zu einem Endgerät, wobei die Zugriffsressourceninformationen durch die DBS zugeteilt werden, nachdem eine Steuerungsbasisstation, CBS, eine durch das Endgerät gesendete Zugriffsanfragenachricht empfängt und die DBS-ID gemäß den in der Zugriffsanfragenachricht geführten Kennungsinformationen des Endgeräts und einer Entsprechung zwischen der DBS-Kennung, DBS ID, und den Kennungsinformationen des Endgeräts bestimmt; und
eine Sendeeinheit (10032), eingerichtet zum Senden der Zugriffsressourceninformationen zu der CBS, so dass die CBS die Zugriffsressourceninformationen zum Endgerät sendet, um das Endgerät anzuweisen, basierend auf den Zugriffsressourceninformationen auf die DBS zuzugreifen,
**gekennzeichnet durch** weiterhin umfassend eine Empfangseinheit (10033), wobei die Empfangseinheit (10033) eingerichtet ist zum:
Empfangen der durch die CBS weitergeleiteten Zugriffsanfragenachricht, wobei die Zugriffsanfragenachricht zum Anfragen der DBS benutzt wird, dem Endgerät eine Zugriffsressource zuzuteilen, wobei die Empfangseinheit (10033) weiterhin eingerichtet ist zum:
Empfangen eines durch das Endgerät gesendeten Erkennungssignals und Melden der Kennungsinformationen des Endgeräts in dem Erkennungssignal an die CBS, so dass die CBS die Entsprechung zwischen der DBS ID und den Kennungsinformationen des Endgeräts aufrechterhält.

7. Basisstation, umfassend die Steuerungsbasisstation, CBS, nach Anspruch 4 und die Datenbasisstation, DBS, nach Anspruch 6.

8. System, umfassend ein Endgerät und weiterhin umfassend die Basisstation nach Anspruch 7.

## Revendications

1. Procédé d'accès à une station de base par un terminal, comprenant :
la réception (200), par une station de base de commande, CBS, d'un message de requête d'accès envoyé par un terminal, dans lequel le message de requête d'accès comporte des informations d'identification du terminal ;
la détermination (210), en fonction des informations d'identification reçues du terminal et d'une correspondance entre une identification de station de base de données ID DBS et des informations d'identification du terminal, d'une ID DBS à laquelle accède le terminal ;
la réception (220) d'informations de ressources d'accès qui sont allouées au terminal par une DBS correspondant à l'ID DBS ; et
l'envoi (230) des informations de ressources d'accès au terminal, de manière à donner instruction au terminal d'accéder, en fonction des informations de ressources d'accès, à la DBS correspondant à l'ID DBS ;
**caractérisé en ce qu'**il comprend en outre, avant la détermination (210) d'une ID DBS qui accède au terminal :
la réception d'un signal de détection qui comporte les informations d'identification du terminal et qui est signalé par la DBS, de manière à maintenir la correspondance entre l'ID DBS et les informations d'identification du terminal.

2. Procédé selon la revendication 1, comprenant en outre avant la réception (220) d'informations de ressources d'accès qui sont allouées au terminal par une DBS correspondant à l'ID DBS :
l'acheminement du message de requête d'accès à la DBS correspondant à l'ID DBS, de manière à demander à la DBS d'allouer une ressource d'accès au terminal.

3. Procédé d'accès à une station de base par un terminal, comprenant :
l'allocation (330), par une station de base de données DBS, d'informations de ressources d'accès à un terminal, dans lequel les informations de ressources d'accès sont allouées par la DBS après qu'une station de base de commande CBS reçoit un message de requête d'accès envoyé par le terminal, et détermine une ID DBS en fonction des informations d'identification du terminal incluses dans le message de requête d'accès et une correspondance entre l'identification ID de DBS et les informations d'identification du terminal ; et
l'envoi (310) des informations de ressources d'accès à la CBS, de telle sorte que la CBS envoie les informations de ressources d'accès au terminal, de manière à donner instruction au terminal d'accéder à la DBS en fonction des informations de ressources d'accès
**caractérisé en ce que** le procédé comprend en outre avant l'allocation (330), par une DBS, d'informations de ressources d'accès à un terminal :
la réception du message de requêtes d'accès acheminé par la CBS, dans lequel le message de requête d'accès est utilisé pour demander à la DBS d'allouer une ressource d'accès au terminal et le procédé comprenant en outre, avant la réception du message de requête d'accès acheminé par la CBS :
la réception d'un signal de détection envoyé par le terminal, et la signalisation des informations d'identification du terminal dans le signal de détection à la CBS, de telle sorte que la CBS maintienne la correspondance entre l'ID DBS et les informations d'identification du terminal.

4. Station de base de commande CBS, comprenant :
une unité de réception (9031), configurée pour recevoir un message de requête d'accès envoyé par un terminal, dans lequel le message de requête d'accès comporte des informations d'identification du terminal ;
une unité de détermination (9032), configurée pour déterminer, en fonction des informations d'identification reçues du terminal et d'une correspondance entre une identification de station de base de données ID DBS et des informations d'identification du terminal, d'une ID DBS à laquelle accède le terminal ;
une unité d'allocation (9033), configurée pour recevoir des informations de ressources d'accès qui sont allouées au terminal par une DBS correspondant à l'ID DBS ; et
une unité d'envoi (9034), configurée pour envoyer les informations de ressources d'accès au terminal, de manière à donner instruction au terminal d'accéder, en fonction des informations de ressources d'accès, à la DBS correspondant à l'ID DBS **caractérisée en ce que** l'unité de réception (9031) est configurée en outre pour :
recevoir un signal de détection qui comporte les informations d'identification du terminal et qui est signalé par la DBS, de manière à maintenir la correspondance entre l'ID DBS et les informations d'identification du terminal.

5. CBS selon la revendication 4, dans laquelle l'unité d'envoi (9034) est configurée en outre pour :
acheminer le message de requête d'accès à la DBS correspondant à l'ID DBS, de manière à demander à la DBS d'allouer une ressource d'accès au terminal.

6. Station de base de données DBS, comprenant :
une unité d'allocation (10031), configurée pour allouer des informations de ressources d'accès à un terminal, dans lequel les informations de ressources d'accès sont allouées par la DBS après qu'une station de base de commande CBS reçoit un message de requête d'accès envoyé par le terminal, et détermine l'ID DBS en fonction d'informations d'identification du terminal incluses dans le message de requête d'accès et une correspondance entre l'identification ID de DBS et les informations d'identification du terminal ; et
une unité d'envoi (10032), configurée pour envoyer les informations de ressources d'accès à la CBS, de telle sorte que la CBS envoie les informations de ressources d'accès au terminal, de manière à donner instruction au terminal d'accéder à la DBS en fonction des informations de ressources d'accès
**caractérisée en ce qu'**elle comprend en outre une unité de réception (10033), dans laquelle l'unité de réception (10033) est configurée pour :
recevoir le message de requêtes d'accès acheminé par la CBS, dans lequel le message de requête d'accès est utilisé pour demander à la DBS d'allouer une ressource d'accès au terminal, dans laquelle l'unité de réception (10033) est configurée pour :
recevoir un signal de détection envoyé par le terminal, et signaler les informations d'identification du terminal dans le signal de détection à la CBS, de telle sorte que la CBS maintienne la correspondance entre l'ID DBS et les informations d'identification du terminal.

7. Station de base, comprenant la station de base de commande CBS selon la revendication 4 et la station de base de données DBS selon la revendication 6.

8. Système, comprenant un terminal, et comprenant en outre la station de base selon la revendication 7.
